Europäisches Patentamt

European Patent Office

Office européen des brevets

(11) Publication number: **0 174 282**
A2

(12) # EUROPEAN PATENT APPLICATION

(21) Application number: **85830199.7**

(51) Int. Cl.⁴: **B 27 B 19/04**

(22) Date of filing: **26.07.85**

(30) Priority: **07.09.84 IT 2258184**

(43) Date of publication of application:
**12.03.86 Bulletin 86/11**

(84) Designated Contracting States:
**AT BE CH DE FR GB LI NL SE**

(71) Applicant: **DECA S.p.A.**
**S.S. San Marino, Km 8**
**I-47040 Ospedaletto di Coriano (Forli)(IT)**

(72) Inventor: **de Biagi, Marino**
**DECA S.p.A. S.S. San Marino, Km 8**
**I-4070 Ospedaletto di Coriano (Forli)(IT)**

(74) Representative: **Cicogna, Franco**
**Ufficio Internazionale Brevetti Dott.Prof. Franco Cicogna**
**Via Visconti di Modrone, 14/A**
**I-20122 Milano(IT)**

(54) **A reciprocating saw.**

(57) A reciprocating saw is provided with a vertical blade (1) controlled by interconnected blade carrier arms (2,2') moved by an eccentric mechanism. The blade (1) is pivotally connected at its ends to upper and lower blade carrier arms (2,2') which are themselves pivoted, by means of suitable shaped spacers (3), to the side walls of a support frame (4) similar in form to a bow for fretwork. The support frame (4) carries, at its closed end, a first pulley (5) on a fixed axis and a second pulley (6) pivoted to one arm of a bellcrank lever (7) the other arm of which is biased by a spring (8) secured to the support frame itself by means of a peg (9). One end of a drive rod (10) is pivotally connected to the lower blade-carrier arm (2') and the upper blade-carrier arm is connected to an inextensible line (13) which passes over the pulleys and leads to an oscillatable drive arm to which the other end of the drive rod is connected.

EP 0 174 282 A2

./...

Fig. 1

0174282

- 1 -

"A Reciprocating Saw"

The present invention relates to a reciprocating saw the blade of which extends vertically and is driven by interconnected oscillating arms moved by an eccentric mechanism.

As is known, for some working operations on wood or metal, it can be advantageous to utilise a reciprocating saw, that is to say a saw in which the blade or blades are driven with a reciprocating movement of convenient frequency. Known reciprocating saws currently commercially available, however, are of rather complex structure and therefore are often and easily subject to functional disturbances with the consequent necessity for frequent maintenance interruptions. Moreover, known reciprocating saws usually have rather heavy reciprocating masses, which cause the saw to vibrate in use which, as well as being unpleasant in itself, can also compromise the correct performance of the cutting operation.

The present invention seeks to overcome the above noted disadvantages of known reciprocating saws by providing a reciprocating saw which will be structurally simple and of great reliability.

According to the present invention, there is provided a reciprocating saw characterised by the fact that it comprises a saw blade carried on oscillatable blade-carrier arms pivotally connected to a support frame and interconnected by means of linear inextensible elements linked to a driving arm pivoted to a link connected eccentrically to a rotatable drive shaft whereby to impart reciprocating movement to the said linear inextensible elements and thus to the saw blade. One advantage of a saw made according to the present invention is that due to its structural simplicity it is practically free from vibration when operating. Another advantage of the saw of the present invention is that it is extremely manageable and easy to transport, and further, the correct tension on the blade can be maintained during cutting.

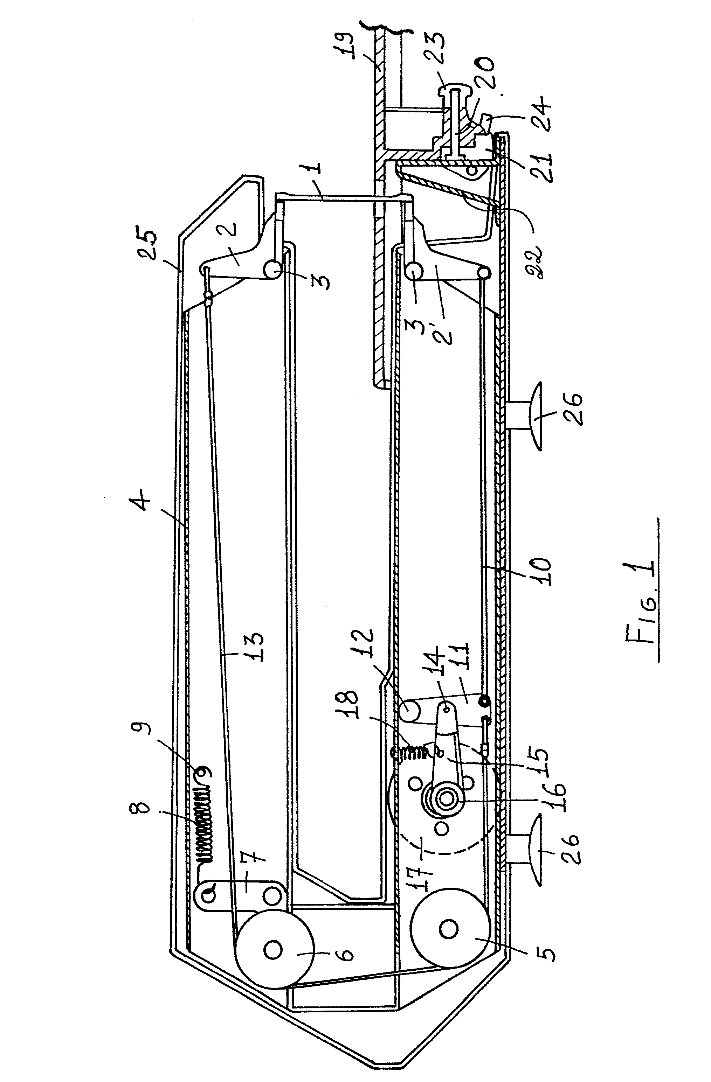

One embodiment of the present invention will now be more particularly described, by way of example, with reference to the accompanying drawing, the single Figure of which is a schematic vertical longitudinal section showing the structure of the reciprocating saw.

Referring now to the drawings, the saw shown comprises a saw blade 1 which may be of any suitable type connected at its ends to respective upper and lower bell crank-type lever arms 2 and 2' which are pivoted, by means of suitable shaped spacers 3 to the side walls of a support structure 4 of elongate C-shape similar in form to a bow for fretwork. This support structure 4 carries at its closed end, a first pulley 5 the spindle of which is fixedly mounted to the structure 4 and a second pulley 6 pivoted to one arm of a bellcrank lever 7 the other arm of

- 3 -

which is biased by a spring 8 fixed to the support structure 4 itself by means of a peg 9.

The lower oscillating blade-carrier arm 2' is pivotally connected to one end of a drive rod 10 the other end of which is pivoted to an angularly reciprocatable driving arm 11 pivoted at 12 to the support structure 4.

A strong inextensible, flexible line 13 (for example nylon) is connected at one end to the pivoted driving arm, passes around the pulleys 5 and 6, and is fixed to the upper blade-carrier arm 2.

At an intermediate point on the said driving arm there is pivoted, by means of a pin 14, a connector link 15 coupled eccentrically by means of a roller bearing 16 to the output drive shaft of a motor 17. This link 15 is resiliently biased with respect to the support structure 4 by means of a spring 18 connected between its mid point and the support structure 4 itself.

During operation of the motor 17, the arm 11 is caused to oscillate angularly about the pivot 12 to cause, via the drive rod 10 and the line 13 corresponding angular oscillations in opposite directions of the two blade-carrier arms 2 and 2', consequently causing the blade 1 to perform a reciprocating cutting movement.

The tension of the line 13 is maintained at its correct value by the action of the biasing spring 8 on

- 4 -

the bellcrank lever 7 which carries the pulley 6.

A work table 19 is also provided; this is fixed to the support structure 4 by means of a clamp bolt 20 which engages with a slide 21 mounted on a suitable support 22. Locking and release of the said work table at a given inclination is obtained by means of a knob 23 which is threadedly engaged on the said clamp bolt whilst the desired inclination of the table itself, with respect to the axis of the blade, is obtained by acting on an eccentric lever 24.

The support structure 4 is enclosed in a suitable casing 25 mounted on feet 26 preferably adjustable in height.

The motor 17 which drives the reciprocating saw may be fed by a circuit (not shown) controlled by an adjustable member such as a rheostat, to permit an adjustment of the speed of rotation of the motor and, therefore, an adjustment of the speed of reciprocation of the saw blade 1.

- 5 -

Claims:

1. A reciprocating saw characterised by the fact that it comprises a saw blade (1) carried on oscillatable blade-carrier arms (2,2') pivotally connected to a support frame (4) and interconnected by means of linear inextensible elements (10,13) linked to a driving arm (11) pivoted to a link (15) connected eccentrically to a rotatable drive shaft (16) whereby to impart reciprocating movement to the said linear inextensible elements (10, 13) and thus to the saw blade (1).

2. A reciprocating saw according to Claim 1, characterised by the fact that the said saw blade (1) is pivotally connected at its ends to the ends of the said corresponding oscillatable upper and lower blade-carrier arms (2,2') pivoted, by means of suitable shaped spacers (3), to the side walls of the said support frame (4), which is of elongate C-shape, similar to a fretwork bow; the support frame (4) carrying at its closed end a first pulley (5) with fixed axis and a second pulley (6) pivotally mounted on one arm of a pivoted bellcrank lever (7) the other arm of which is biased by a spring (8) fixed to the support frame (4).

3. A reciprocating saw according to Claim 2, characterised by the fact that the said lower oscillatable blade-carrier arm (2') is articulated to one end of a drive rod (10) the other end of which is pivoted to a driving arm (11) pivoted on the support frame (4) and connected to an inextensible,

- 6 -

flexible line, which passes over the said two pulleys (5,6) and is fixed at its other end to the upper oscillatable blade-carrier arm.

4. A reciprocating saw according to Claim 3, characterised by the fact that to an intermediate point of the said driving arm (11) there is pivoted, by means of a pin (14), a link (15) eccentrically coupled by means of a roller bearing (16) to the shaft of a motor (17); the link (15) being resiliently biased with respect to the support frame (4) by means of a spring (18).

5. A reciprocating saw according to any preceding Claim, characterised by the fact that it includes a work table (19) fixed to the support frame (4) by means of a clamp bolt (20) which engages with a slide (21) mounted on a support (22) fixed to the support frame (4); locking and release of the work table (19) being effected by means of a knob (23) which engages the said clamp bolt (20), and adjustment of the inclination of the work table (19) with respect to the axis of the blade (1), being effected by means of an eccentric lever (24).

6. A reciprocating saw according to any preceding Claim, characterised by the fact that the said support frame (4) is enclosed in a casing (25) mounted on feet (26).

7. A reciprocating saw according to any

- 7 -

preceding Claim, characterised by the fact that a drive motor thereof is supplied by a circuit controlled by a rheostat operable to permit the regulation of the speed of rotation of the motor and therefore the speed of reciprocation of the saw blade (1).

Fig. 1